# EUROPEAN PATENT SPECIFICATION

(11) **EP 0 509 550 B1**
(45) Date of publication and mention of the grant of the patent: **08.01.1997**
(21) Application number: 92106801.1
(22) Date of filing: 21.04.1992
(51) Int. Cl.: G03B 7/097

(54) **Shutter control device for camera**
Verschlussteuerungsvorrichtung für eine Kamera
Dispositif de commande d'un obturateur pour une caméra

(43) Date of publication of application: 21.10.1992
(73) Proprietor: Seiko Precision Inc., Tokyo 130 (JP)
(72) Inventor: Akimoto, Kazuo, c/o Seikosha Co.,Ltd., Yotsukaido-shi, Chiba-ken (JP); Iwamatsu, Yoshiyuki, c/o Seikosha Co.,Ltd., Yotsukaido-shi, Chiba-ken (JP); Kakuta, Mitsuhiro, c/o Seikosha Co.,Ltd., Yotsukaido-shi, Chiba-ken (JP); Miyata, Shinji, c/o Seikosha Co.,Ltd., Yotsukaido-shi, Chiba-ken (JP); Fujita, Hiroko, c/o Seikosha Co.,Ltd., Yotsukaido-shi, Chiba-ken (JP); Nakamura, Tomoki, c/o Seikosha Co.,Ltd., Yotsukaido-shi, Chiba-ken (JP)
(74) Representative: Grünecker, Kinkeldey, Stockmair & Schwanhäusser Anwaltssozietät

(56) References cited:
- DE-A- 3 910 448
- DE-A- 4 021 803
- JP-A- 4 319 924
- US-A- 4 697 908

## Description

### [FIELD OF INDUSTRIAL APPLICATION]

This invention relates to a shutter control device for a camera according to the preamble of claim 1, and particularly to a shutter control device for controlling an exposure amount of a camera in a diaphragm-priority mode.

### [PRIOR ART AND PROBLEM TO BE SOLVED BY THE INVENTION]

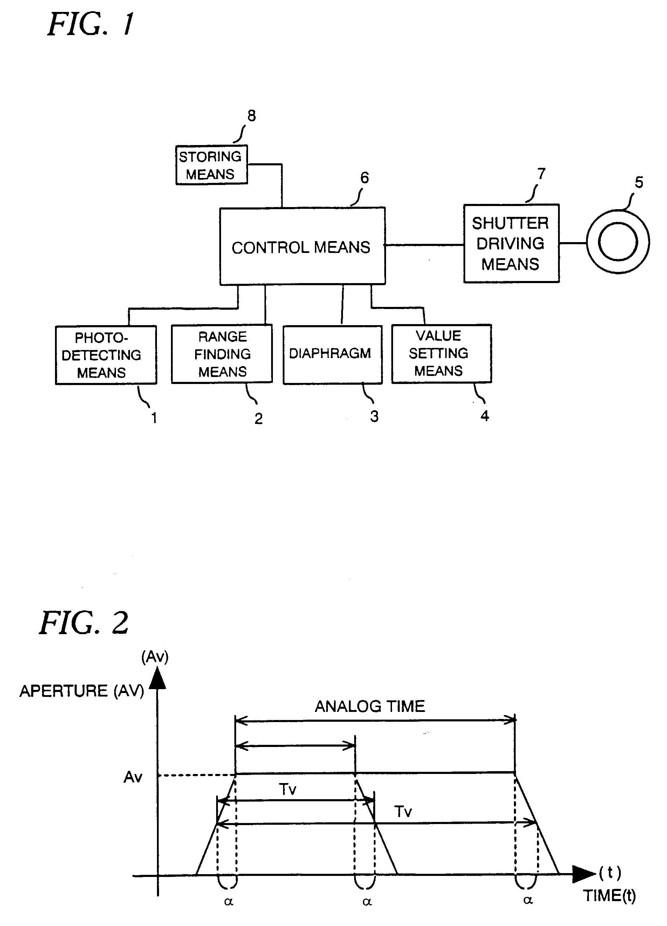

An exposure amount (Ev) of a camera is generally determined by the area of a waveform (trapezoidal waveform) as shown in Fig. 2. which represents a series of shutter driving operations for a period when a shutter starts its opening motion, reaches a predetermined aperture and completed its closing motion. In a so-called trapezoid (trapezoidal waveform) control operation in which an exposure time is controlled on the basis of a predetermined diaphragm value, the shutter is controlled to be opened at a predetermined aperture for a predetermined opening period, and thus AE pulse data and analog time data used to determine the time between pulses must be obtained. Therefore, a conventional camera has been equipped with a storing unit in which a data table representing the number of AE pulses and another data table representing an analog opening time are stored every for exposure amount (Ev) in accordance with an aperture, and the control of the exposure amount has been carried out with reference to these data tables.

However, such a conventional AE control system requires a data table to be prepared every each exposure amount in order to cover all aperture values, and thus the number of the data tables to be prepared is greatly increased. In addition, the linearity of the trapezoidal waveform representing opening and closing states of a shutter is ordinarily dispersed in accordance with a shutter of a camera, and it has been conventionally very difficult to correct the dispersion of the linearity.

A shutter control device in accordance with the preamble of claim 1 is known from DE-A-39 10 448. This shutter control device includes detecting means for observing running conditions of the shutter plates, and comparing means are provided which compare the running conditions with data stored in the storing means of the device. The shutter control means changes opening-closing pulses of the shutter plates in response to the output of said comparing means in every shot.

It is the object of the present invention to overcome the difficulties of conventional shutter control systems and to provide a shutter control device for a camera in which various program controls can be easily carried out using a small amount of data memory.

This object is achieved by the features indicated in claim 1.

Preferably, a correction value (β) inherent to the shutter is beforehand in the storing means equipped to the control means, and the shutter opening time (T) is calculated on the basis of the correction value.

### [BRIEF DESCRIPTION OF THE DRAWINGS]

[Fig. 1]
   is a block diagram of an embodiment of the shutter control device for a camera according to this invention.
[fig. 2]
   is a schematic diagram showing a shuttering operation.
[Fig. 3]
   is another schematic diagram showing the shuttering operation.
[Fig. 4]
   shows an example of a data table used in this invention.
[Fig. 5]
   is a flowchart for a shutter control of this invention.
[Fig. 6]
   is a schematic diagram of a shuttering operation which requires correction.
[Fig. 7]
   is a flowchart for a shutter control of this invention.

### [DESCRIPTION OF REFERENCE NUMERALS]

1 . . . photodetecting means
2 ... range finding means
3 ... ISO setting means
4 ... diaphragm value setting means
5 ... shutter-opening time control means
6 . . . control means
7 ... shutter driving means
8 ... storing means

### [EMBODIMENT]

An embodiment of a shutter control device for a camera according to this invention will be hereunder described with reference to the accompanying drawings.

As shown Fig. 1, the shutter control device for a cameral includes measuring means comprising photodetecting means 1 for photometrically detecting the brightness of an object and range finding means 2 for measuring a distance to the object, setting means comprising ISO setting means 3 for setting a film-sensitivity information and diaphragm-value setting means 4 for setting a diaphragm value, control means 6 for calculating the outputs of the measuring means and the setting means and controlling an opening time of a shutter, shutter driving means 7 for driving the shutter 5 on the basis of an output of the control means 6, and storing means 8 for storing a predetermined data required for the calculation.

In this embodiment, the shutter 5 is a lens shutter which also serves as a diaphragm, and includes plural sectors whose opening and closing operations are carried out in accordance with forward and reverse rotational motions of a motor serving as the shutter driving means 7. A shutter and diaphragm driving operations are carried out by allowing the shutter to be opened at a predetermined aperture for a predetermined period.

The photodetecting means 1 serves to measure the brightness (Bv) of the object using a photosensitive element. The range finding means 2 comprises, for example, a light emitting element for irradiating light such as infrared rays to the object and a photosensitive element for receiving the light reflected from the object, and serves to measure a distance (Dv) between the camera and the object. The ISO setting means 3 serves to set a film-sensitivity information (Sv) through a manual setting switch or a read-out of a DX code of a film patrone.

The diaphragm value setting means 4 serves to manually set a diaphragm value or automatically set the diaphragm value on the basis of the measured value of the range finding means 2 and the set value of the ISO setting means 3, and output a signal corresponding to the diaphragm value to the control means 6. The diaphragm value setting means 4 may be contained in the control means 6 if it automatically sets the diaphragm value.

The control means 6 serves to subject the outputs of the photodetecting means 1, the range finding means 2, the ISO setting means 3 and the diaphragm setting means 4 to a calculation processing as described below to thereby determine a shutter-opening time for the set diaphragm value and exposure amount and output a signal corresponding to the determined shutter-opening time to the shutter driving means 7.

The storing means 8 preferably comprises a non-volatile ROM such as an EEPROM, and stores various data required for the calculation, such as data for a shutter-opening pulse (AE pulse) corresponding to each aperture value, data for calculation of an analog time, date for the difference (α) between a calculated effective exposure time (Tv) and a shutter-opening time (T), a shutter-opening inclination (k), a correction value (β) of the shutter-opening inclination, etc. The shutter driving means 7 comprises a motor such as a DC motor. a stepping motor or the like, and a motor driver, and serves to drive opening and closing operations of the shutter sectors controlled by the control means 6.

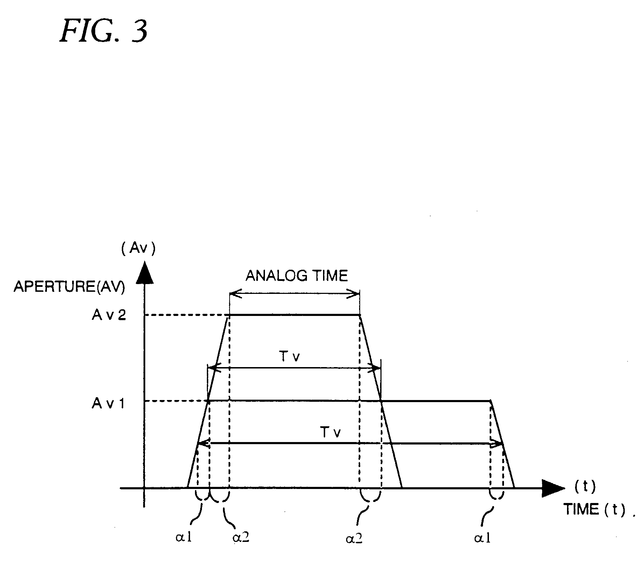

The calculation of the analog opening time (T) of the shutter in the control means 6 will be next described with reference to Figs. 2 and 3. In Figs. 2 and 3, abscissa and ordinate represent time and aperture (Av) of the shutter, respectively.

First, the output of the photodetecting means 1 which represents the brightness (Bv) of the object, and the outputs of the ISO setting means which represents a film-sensitivity information (Sv) are calculated to obtain an exposure amount (Ev) using the following equation.$\text{Ev = Bv + Sv}$

Subsequently, the output of the range finding means 2 which represents the distance (Dv) to the object and the output representing the film-sensitivity information (Sv) are calculated to obtain an aperture value (Av) using the following equation.$\text{Av = Dv + Sv}$

If the aperture is required to be determined independently of a result of the range finding, it is determined with a diaphragm value which has been set without the above calculation. An effective exposure amount (Tv) is further calculated from the exposure amount (Ev) and the aperture value (Av) thus obtained, in accordance with the following equation.$\text{Tv = Ev - Av}$ In an isosceles trapezoidal waveform, if the aperture of the shutter (Av) is constant, the difference (α) between the effective exposure amount (Tv) and the analog opening time (T) would be constant as indicated by the following equation.$\text{T = Tv - 2α}$

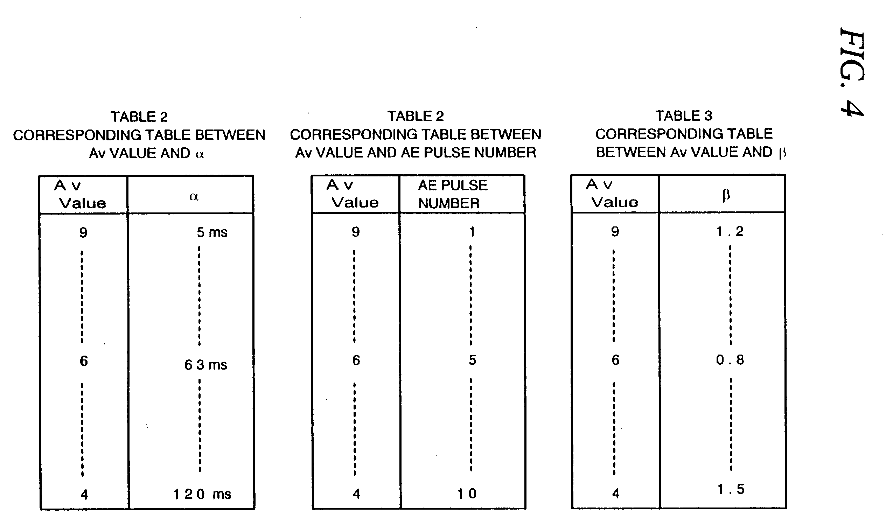

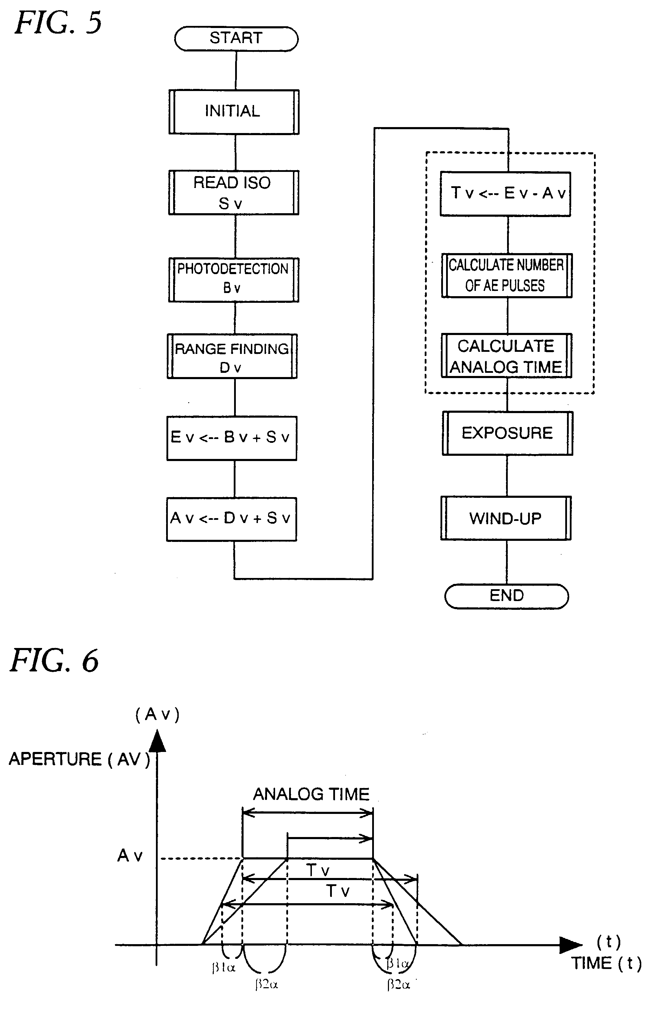

Therefore, when a data table representing a correspondence relationship between an α-value and an aperture value as shown in Fig. 4 (table 1) is beforehand stored in the storing means 8, the analog opening time (T) can be obtained by reading out the α-value from the data table, and carrying out the above calculation (Fig. 5). In addition, since a data of an AE pulse corresponding to each aperture value (Av) is beforehand stored in the storing means 8 as shown in Fig. 4 (table 2), the trapezoid control can be performed on the basis of the calculated analog opening time (T) and the AE pulse. Alternatively, since difference (α) between the effective exposure amount (Tv) and the analog opening time (T) is proportional to the aperture value (Av) if the shutter-opening inclination is constant (Fig. 3), the analog opening time (T) may be obtained by beforehand storing a proportional constant (k), that is, a shutter-opening inclination in this case in the storing means, and reading out the proportional constant (k) to perform the following calculation:$\text{T = Tv - 2kAv.}$

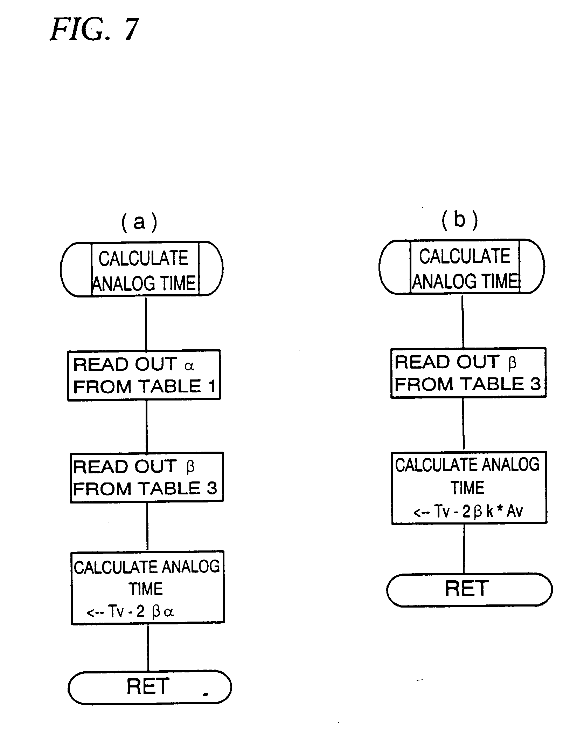

The above operation is possible in the case where the shutter operation is ideally carried out. However, there are some cases where the shutter-opening inclination is not uniform in an actual shutter (Fig. 6). In such a case, correction inherent to the shutter is required to be made in accordance with the aperture. In order to satisfy this requirement, data of correction values (β) corresponding to aperture values are beforehand stored in the storing means 8 as shown in Fig. 4 (table 3), and the analog opening time (T) is obtained from the following equations: T = Tv - 2βα or T = Tv -2βkAv (Fig. 7(a) or Fig. 7(b)).

The shutter driving operation In the control system as described above will be next described.

First, the shutter motor is rotationally driven in a forward rotational direction on the basis of a signal from the control means 6, so that the shutter sectors start their opening motion. Here, an aperture value (Av) of the shutter is determined by the number of AE pulses which has been stored in the storing means 8. The opening operation of the shutter sectors is continued until the motor is rotated by a desired rotation amount so that the shutter has a calculated aperture value (Av). When the shutter has the calculated aperture value (Av), the rotational driving of the motor is stopped, and the opening of the shutter is kept for a calculated analog opening time (T). Subsequently, the shutter motor is rotationally driven in a reverse direction to close the shutter.

### [EFFECT OF THE INVENTION]

As is apparent from the above embodiment, according to the shutter control device of this invention, the trapezoid control operation can be carried out with a fixed data including only the AE pulse data, and thus a data ROM having a small capacity can be used. In addition, according to this invention, since a correction amount inherent to a shutter is beforehand stored in the EEPROM, the error of a shutter-opening inclination of an individual shutter can be easily corrected, and a proper shutter control operation can be carried out at all times.

## Claims

1. A shutter control device for a camera including measuring means (1, 2) for measuring the brightness of an object and the distance to the object, setting means (3, 4) for setting an aperture value of a shutter (5), control means (6) for controlling operation of the shutter, said control means including storing means (8), **characterized in that** the storing means (8) are arranged for storing the shutter blades' running time from an initial position to a predetermined aperture (Av) and in that said control means (6) is adapted to calculate an effective exposure time (Tv) on the basis of the outputs from said measuring means (1, 2) and said setting means (3, 4) and to calculate the time (t) the shutter blades are actually open at the predetermined aperture (Av) on the basis of said effective exposure time (Tv) and said shutter blade running time (α) to control operation of the shutter.

2. The shutter control device as claimed in claim 1, wherein said storing means (6) contains a correction value (β) inherent to the shutter taking into account the non-uniform motion of the shutter blades.

3. The shutter control device as claimed in claim 1 or 2, wherein the running time is calculated from an aperture (Av) set and a proportionality factor (k) between aperture (Av) and running time (α).

## Patentansprüche

1. Eine Verschlußsteuervorrichtung für eine Kamera, welche eine Meßeinrichtung (1, 2) zum Messen der Helligkeit eines Objekts und der Entfernung zu dem Objekt, eine Einstelleinrichtung (3, 4) zum Einstellen eines Blendenwertes eines Verschlusses (5) und eine Steuereinrichtung (6) zum Steuern des Betriebs des Verschlusses enthält, wobei die Steuereinrichtung eine Speichereinrichtung (8) enthält,
**dadurch gekennzeichnet,**
daß die Steuereinrichtung (8) zum Speichern der Verschlußplattenbewegungszeit von einer Anfangsposition zu einem vorbestimmten Blendenwert(Av) vorgesehen ist, und daß die Steuereinrichtung (6) dazu vorgesehen ist, eine effektive Belichtungszeit (Tv) auf der Basis der Ausgangssignale der Meßeinrichtung (1, 2) und der Einstelleinrichtung (3, 4) zu berechnen, und die Zeit (t) zu berechnen, in der die Verschlußplatten tatsächlich bei dem vorbestimmten Blendenwert (Av) offen sind, auf der Basis der effektiven Belichtungszeit (Tv) und der Verschlußplattenbewegungszeit (α), um den Betrieb des Verschlusses zu steuern.

2. Die Verschlußsteuereinrichtung nach Anspruch 1, wobei die Steuereinrichtung (6) einen dem Verschluß inhärenten Korrektionswerte (β) enthält, welcher die gleichmäßige Bewegung der Verschlußplatten berücksichtigt.

3. Die Verschlußsteuereinrichtung nach Anspruch 1 oder 2, wobei die Bewegungszeit aus einem eingestellten Blendenwert (Av) und einem Proportionalitätsfaktor (k) zwischen dem Blendenwert (Av) und der Bewegungszeit (α) berechnet wird.

## Revendications

1. Dispositif de commande d'un obturateur pour une caméra comprenant des moyens de mesure (1, 2) pour mesurer la luminosité d'un objet et la distance jusqu'à l'objet, des moyens de détermination (3, 4) pour déterminer une valeur d'ouverture d'un obturateur (5), des moyens de commande (6) pour commander le fonctionnement de l'obturateur, lesdits moyens de commande comprenant des moyens de stockage (8), caractérisé en ce que les moyens de stockage (8) sont agencés pour stocker le temps de fonctionnement des lames de l'obturateur d'une position initiale jusqu'à une ouverture prédéterminée (Av) et en ce que lesdits moyens de commande (6) sont adaptés pour calculer un temps d'exposition efficace (Tv) en se basant sur les sorties desdits moyens de mesure (1, 2) et desdits moyens de détermination (3,4) et pour calculer le temps (t) où les lames de l'obturateur sont réellement ouvertes à l'ouverture prédéterminée (Av) en se basant sur ledit temps d'exposition efficace (Tv) et ledit temps de fonctionnement (α) des lames de l'obturateur pour commander le fonctionnement de l'obturateur.

2. Dispositif de commande d'un obturateur pour une caméra selon la revendication 1, dans lequel lesdits moyens de stockage (6) contiennent une valeur de correction (β) inhérente à l'obturateur prenant en compte le mouvement uniforme des lames de l'obturateur.

3. Dispositif de commande d'un obturateur pour une caméra selon la revendication 1 ou 2, dans lequel le temps de fonctionnement est calculé à partir d'une ouverture déterminée (Av) et d'un facteur de proportionnalité (k) entre l'ouverture (Av) et le temps de fonctionnement (α).
